# EUROPEAN PATENT SPECIFICATION

(11) **EP 0 820 856 B1**
(45) Date of publication and mention of the grant of the patent: **11.10.2000**
(21) Application number: 96600007.7
(22) Date of filing: 26.07.1996
(51) Int. Cl.: B29D 7/01, B29C 55/04, B29D 28/00

(54) **Perforated pre-streched strech film for pallet wrapping**
Perforierte, vorgestreckte Streckfolie für Umhüllung von Paletten
Film étirable perforé pre-étiré pour enroulement de palettes

(43) Date of publication of application: 28.01.1998
(73) Proprietor: Kavvadias, Harilaos, 71306 Herakleion - Crete (GR)
(72) Inventor: Kavvadias, Harilaos, 71306 Herakleion - Crete (GR)
(74) Representative: MÜLLER & HOFFMANN Patentanwälte

(56) References cited:
- EP-A- 0 484 554
- GB-A- 1 083 847
- GB-A- 1 184 635

## Description

The present invention is referred to perforated pre-stretched plastic stretch film for pallet wrapping suitable for products requiring ventilation.

These stretch films are used for goods such as fruits, vegetables, plants, deep freeze goods, living organisms etc. They have holes opened through their surface in order that the goods can be ventilated. An essential feature of those stretch films is the smallest possible thickness in relation to the maximum possible mechanical strength, while the ease of use is determinative.

Similar products include the wrapping nets and the non-stretched perforated wrapping films, which have certain disadvantages causing their gradual limitation of use in the market.

The disadvantages of the wrapping nets include the difficulty in use since there are two knots required to be made by hand, one at the beginning and one at the end of the pallet. Furthermore, a huge volume of scrap is created which causes problems to forklifts and rest vehicles, by jamming in their driving systems.

For the same reason there are difficulties created in the collection of this scrap.

The disadvantage of the non-stretched perforated films is the high cost, due to the large material quantity per unit area so that the correct quality can be achieved. Furthermore, these films are perforated by using mechanical means which does not allow application to very thin films, since it is not possible to create holes with material accumulated around their lips.

Therfore the mechanical perforation is used for relatively thick films, resulting in increased product cost with relatively low mechanical strength. In addition any angle at the lip of the hole create points of potential mechanical fault (tearing) of the product. Additionally, due to the remainders created, there is scrap during production.

GB-A-1 184 635 shows a process for obtaining net-like structures from thermoplastic sheet materials by exposing the sheet material to infra-red radiation while the sheet is adjacent a pattern composed of areas of good absorption properties towards infra-red radiation and interconnected areas of poor absorption properties towards infra-red radiation. The film is contacted by the pattern.

The object of the invention is to provide a pre-stretched plastic stretch film and a packaging film consisting of the pre-stretched plastic stretch film being perforated by a process without any scrap and having excellent mechanical properties allowing the stretching of the film at a high degree.

The object of the invention is solved by a pre-stretched plastic stretch film according to claim 1 and a packaging film according to claim 2. Preferred embodiments of the invention are defined in the dependent claims.

The present invention concerns a new perforated pre-stretched film for pallet wrapping, made of stretch film. For the manufacturing of this perforated pre-stretched stretch film, the holes are opened with the use of new technology without contact with the film (use of thermal radiation). In this way, material accumulation is created around the lip of the hole, which, combined with the distance among the holes and their geometrical order, allows the stretching of the film in an easy and simple manner in order that excellent mechanical properties can be achieved while keeping small thickness. It has to be pointed out that stretching of non-perforated film is extremely difficult and requires special mechanisms.

The perforated pre-stretched stretch film for pallet wrapping, has the following advantages compared to other commercial products for pallet wrapping :
1) Its weight is less than 12 gr/m2 compared to 16-25 gr/m2 of the non-stretched perforated film for pallet wrapping, resulting in significant saving of stretch film and therefore a cheaper product for the end user. In addition, the thickness is less than 14 microns, compared to 18-25 microns of non-stretched film.
2) Its strength (breaking point) for width 0.5 m and weight less than 12 gr/m2, is greater than 18 kg compared to max 12-13 kg of other perforated films for pallet wrapping
   (non-stretched and perforated using mechanical means). Thus, in combination to the smaller weight mentioned before, the product has greater mechanical strength and, at the same time, smaller weight, and therefore we have wider field of applications and better results during the application with simultaneous cost reduction.
3) The holes of the perforated pre-stretched stretch film occupy the 30-70% of its surface compared to max 20% of the perforated non-stretched film, thus allowing much better ventilation of the packed product.
4) There is no scrap created during the production of the film due to the fact that there is no material removed for opening the hole, resulting in reduction of production cost, avoiding environmental pollution and untidiness of the production area and no need for scrap recycling.
5) Since the holes are opened on the film using thermal radiation, they have a smooth lip without irregularities or angles, there is no danger of material fault (tearing) and all conditions for stretching are created.
6) Lower investment cost (approximately 1/4) for the production of the perforated pre-stretched stretch film compared to the one required for other products for similar use such as pallet wrapping net.
7) Easier use for pallet wrapping, since there is only one knot to be made by the user when starting wrapping the pallet, because the perforated pre-stretched stretch film contains adhesive material. With other products such as the pallet wrapping net, there are two knots required.
8) When unpacking a pallet packed with perforated pre-stretched film, there is a very small volume of scrap (due to the sticky texture and the small weight per m2). Threfore, there are no problems with the forklifts (jamming at the wheels etc) as with the pallet wrapping net.
9) Smaller environmental pollution due to smaller weight per m2 of product, and smaller recycling cost (concentration of larger quantities and in this sense less often recycling) compared to the non-stretched perforated stretch film.

It has to be noted that there are many methods for the manufacturing of perforated stretch film without its being succesfully stretched above 150-200%. The use of thermal radiation for the opening of holes which is used for manufacturing the perforated pre-stretched stretch film according to the present invention, allows material accumulation around the hole lip. Furthermore, this way helps avoiding the creation of irregularities and angles which can become cause of fault (tearing). In addition, successive holes are almost in touch at the direction of stretching.

The above, result in the possibility of stretching the film in an easy, simple and economical manner with elongation 200-500%.

Thus a new product is created, the perforated pre-stretched stretch film for pallet wrapping, with excellent mechanical properties and smaller weight per m2.

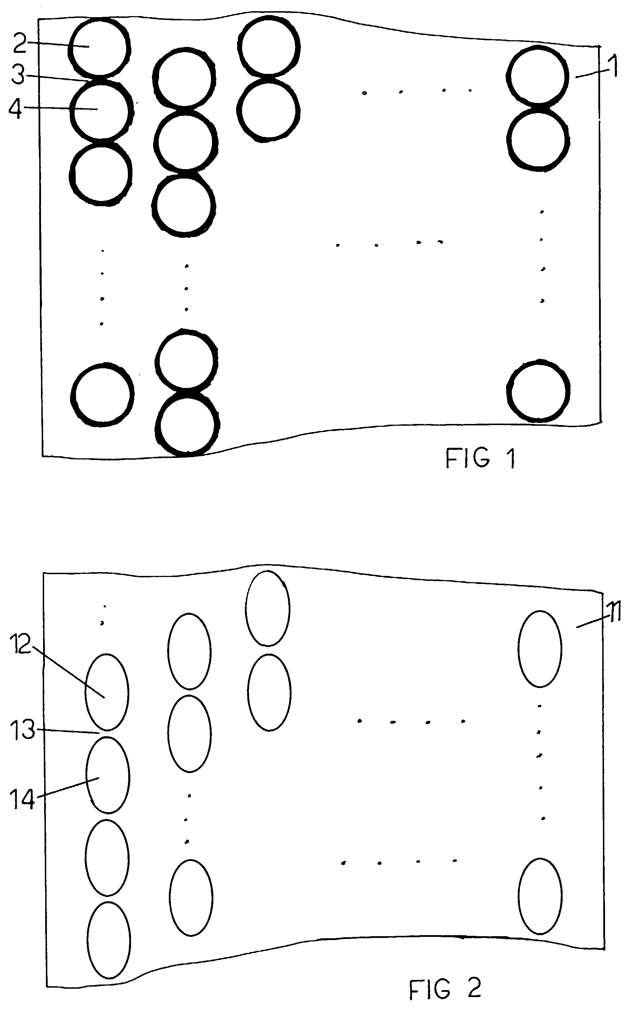

The above are illustrated in the following figs 1-2. In fig 1, the perforated pre-stretched stretch film for pallet wrapping according to the present invention is shown, just after perforation and before stretching. In fig 2 the same film is shown after stretching.

In more detail, fig 1 shows stretch film (1) on which holes (2) have been opened in such a way that material accumulates around the hole lip, while the neighbouring hole (4) is close in relation to its diameter at the direction of stretching. Thus the material is also accumulated in section (3) between the holes. The holes shown in the figure are indicative. In the product the holes are opened accross the total area of the film.

Fig 2 shows the same film (11) after stretching, where the section (13) between the holes (12,14) has not been elongated.

## Claims

1. Pre-stretched plastic stretch film (1) having many holes (2, 4) arranged in rows in a main direction and manufactured by a thermal radiation method without contacting the film, each hole (2, 4) being surrounded by a lip (3) of a thickness greater than a thickness of the plastic film thereby forming a material accumulation around the hole (2, 4), wherein a distance between two neighboring holes (2, 4) in a row is determined such that the lips (3) of the two neighboring holes are contacting or partially overlapping each other.

2. Packaging film (11) consisting of the pre-stretched plastic stretch film (1) according to claim 1, wherein the film (1) is subjected to an elongation in the main direction after formation of the holes (2, 4).

3. Packaging film according to claim 2, wherein the elongation of the film (1) is in the range of 200 to 500 %.

4. Packaging film according to claim 2 or 3, wherein the thickness is smaller than 14 microns.

5. Packaging film according to one of claims 2 to 4, wherein its weight is smaller than 12 g/m².

6. Packaging film according to one of claims 2 to 5, wherein its breaking point in the main direction is greater than 18 kg for a width of 50 cm.

7. Packaging film according to one of claims 2 to 6, wherein the holes (12, 14) cover 30 to 70 % of the area of the elongated film (11).

## Patentansprüche

1. Vorgestreckte Kunststoffstreckfolie (1) mit einer Vielzahl von Löchern (2, 4), die in Reihen in einer Hauptrichtung angeordnet sind und durch ein thermisches Bestrahlungsverfahren ohne Berühren der Folie hergestellt werden, wobei jedes Loch (2, 4) durch einen Wulst (3) mit einer Dicke umgeben ist, die größer als eine Dicke der Kunststofffolie ist, wodurch eine Materialansammlung um das Loch (2, 4) herum ausgebildet ist, wobei ein Abstand zwischen zwei benachbarten Löchern (2, 4) in einer Reihe derart bestimmt ist, dass sich die Wulste (3) der zwei benachbarten Löcher einander berühren oder teilweise miteinander überlappen.

2. Verpackungsfolie (11), die aus der vorgestreckten Kunststoffstreckfolie (1) nach Anspruch 1 besteht, **dadurch gekennzeichnet**, dass die Folie (1) nach Ausbildung der Löcher (2, 4) in der Hauptrichtung verstreckt ist.

3. Verpackungsfolie nach Anspruch 2, **dadurch gekennzeichnet**, dass die Verstreckung der Folie (1) 200 % bis 500 % beträgt.

4. Verpackungsfolie nach Anspruch 2 oder 3, **dadurch gekennzeichnet**, dass ihre Dicke kleiner als 14 µm ist.

5. Verpackungsfolie nach einem der Ansprüche 2 bis 4, **dadurch gekennzeichnet**, dass ihr Gewicht kleiner als 12 g/m² ist.

6. Verpackungsfolie nach einem der Ansprüche 2 bis 5, **dadurch gekennzeichnet**, dass für eine Breite von 50 cm ihre Festigkeitsgrenze in der Hauptrichtung größer als 18 kg ist.

7. Verpackungsfolie nach einem der Ansprüche 2 bis 6, **dadurch gekennzeichnet**, dass die Löcher (12, 14) 30 % bis 70 % des Gebiets der verstreckten Folie (11) bedecken.

## Revendications

1. Film étirable en matière plastique pré-étiré (1) comportant de nombreux trous (2, 4) disposés en rangées dans une direction principale, et fabriqué grâce à un procédé par rayonnement thermique sans contact, chaque trou (2, 4) étant entouré d'une lèvre (3) ayant une épaisseur supérieure à l'épaisseur du film en matière plastique pour ainsi former une accumulation de matière autour du trou (2, 4), une distance entre deux trous (2, 4) voisins d'une rangée étant déterminée pour que les lèvres (3) des deux trous voisins soient en contact ou se chevauchent partiellement.

2. Film d'emballage (11) constitué par le film étirable en matière plastique pré-étiré (1) selon la revendication 1, dans lequel le film (1) est soumis à un allongement dans la direction principale après formation des trous (2, 4).

3. Film d'emballage selon la revendication 2, dans lequel l'allongement du film (1) se situe dans la plage de 200 à 500 %.

4. Film d'emballage selon la revendication 2 ou 3, dans lequel l'épaisseur est inférieure à 14 microns.

5. Film d'emballage selon l'une des revendications 2 à 4, dont le poids est inférieur à 12 g/m².

6. Film d'emballage selon l'une des revendications 2 à 5, dont la limite de rupture dans la direction principale est supérieure à 18 kg pour une largeur de 50 cm.

7. Film d'emballage selon l'une des revendications 2 à 6, dans lequel les trous (12, 14) couvrent 30 à 70 % de la surface du film allongé (11).
